# EUROPÄISCHE PATENTSCHRIFT

(11) **EP 0 947 623 B1**
(45) Veröffentlichungstag und Bekanntmachung des Hinweises auf die Patenterteilung: **27.02.2002**
(21) Anmeldenummer: 98106032.0
(22) Anmeldetag: 02.04.1998
(51) Int. Cl.: D06H 5/00, B29C 65/08, B29C 65/00, B29C 65/50, D21F 1/00, D21F 7/08

(54) **Textilbahn, Verfahren zur Herstellung einer solchen Textilbahn sowie Vorrichtung zur Durchführung dieses Verfahrens**
Textile web, method of production and apparatus
Bande textile, procédé pour la fabrication et appareil

(43) Veröffentlichungstag der Anmeldung: 06.10.1999
(73) Patentinhaber: Thomas Josef Heimbach Gesellschaft mit beschränkter Haftung & Co., D-52353 Düren (DE)
(72) Erfinder: Körfer, Stefan, 41239 - Mönchengladbach (DE)
(74) Vertreter: Paul, Dieter-Alfred, Dipl.-Ing.

(56) Entgegenhaltungen:
- EP-B- 0 464 258
- GB-A- 975 750
- US-A- 1 821 455
- US-A- 4 090 897
- US-A- 4 501 782
- US-A- 5 360 656

## Beschreibung

Die Erfindung betrifft eine Textilbahn, insbesondere als Basis für Papiermaschinenbespannungen, wobei die Textilbahn Strukturfäden enthält und in Breitenrichtung gesehen wenigstens teilweise aus mehreren aneinanderliegenden Teilbahnen zusammengesetzt ist, welche an ihren Bahnrändern miteinander verschweißt sind. Sie betrifft des weiteren ein Verfahren zur Herstellung einer solchen Textilbahn.

Textilbahnen der vorgenannten Art werden in erster Linie zum Transport von Papierbahnen durch eine Papiermaschine verwendet (GB-A-975 750; EP-A-0 665 329; EP-B-0 464 258). Sie sind in Breitenrichtung gesehen aus Teilbahnen aufgebaut, deren Breite wesentlich geringer ist als die Endbreite der Textilbahn. Die Teilbahnen erstrecken sich im wesentlichen in Längsrichtung der Textilbahn und sind dadurch gebildet, daß ein oder mehrere Teilbahnstreifen in Längsrichtung der Textilbahn sowie wendelförmig quer dazu fortschreitend gewikkelt worden sind.

Bei einer Version bestehen die Teilbahnen aus Strukturfäden, beispielsweise in Form eines Gewebes. Bei anderen Versionen bilden die Strukturfäden einen Träger, auf den ein Faservlies ein- oder beidseitig aufgenadelt ist, so daß die Textilbahn einen Filz bildet. Solche Filze sind insbesondere für die Führung der Papierbahnen in der Pressenpartie einer Papiermaschine geeignet.

Bei den vorbekannten Textilbahnen werden die einzelnen Teilbahnen nicht nur überlappend gewickelt, sondern auch mit ihren Bahnrändern nebeneinander. Um hinreichend Querstabilität zu erhalten, werden die Bahnränder miteinander verbunden. Hierfür wird vorgeschlagen, die Bahnränder zu vernähen, zu verschmelzen oder zu verschweißen, beispielsweise mit Ultraschallverschweißung (EP-A-0 665 329). Alternativ ist vorgesehen, die Bahnränder mit Nahtschlaufen zu versehen und die Verbindung mit Hilfe eines Steckdrahtes durch die Nahtschlaufen herzustellen.

Aus US-A-4 090 897 ist ein Papiermaschinen bekannt, dessen stirnseitige Endkanten über eine Quernaht, durch einen verschweißten Verbindungsfaden der zwischen den Fadenabschnitten angeordnet ist miteinander verbunden werden.

Bei den bekannten Lösungen für die Verbindung der Bahnränder der Teilbahnen ist von Nachteil, daß der Aufbau der Textilbahn im Verbindungsbereich erheblich von den übrigen Bereichen abweicht, so daß beispielsweise die Durchlässigkeit der Textilbahn verändert wird, was für den Einsatz der Textilbahn in einer Papiermaschine für die Qualität der Papierbahn beeinträchtigen kann. Dies ist insbesondere dann der Fall, wenn die Bahnränder miteinander vernäht werden. Der Nähfaden stellt ein Fremdmaterial dar, das den Warencharakter verändert. Außerdem ist die Verschiebefestigkeit nicht befriedigend. Hinzu kommt, daß einige der Vorschläge für die Verbindung der Bahnränder sehr arbeitsaufwendig sind.

Der Erfindung liegt demnach die Aufgabe zugrunde, eine Verbindung für die Bahnränder der Teilbahnen einer Textilbahn der eingangs genannten Art so zu gestalten, daß sie auf einfache Weise, vorzugsweise maschinell, hergestellt und dabei auch so gestaltet werden kann, daß die Durchlässigkeit der Textilbahn im Verbindungsbereich nicht wesentlich verändert wird. Eine weitere Aufgabe besteht darin, ein Verfahren zur Herstellung einer solchen Verbindung und eine Vorrichtung zur Durchführung dieses Verfahrens bereitzustellen.

Diese erstgenannte Aufgabe wird erfindungsgemäß dadurch gelöst, daß die Teilbahnen an ihren Bahnrändern überstehende Fadenabschnitte aufweisen, die überlappend ineinandergreifen, und daß über die sich überlappenden Bereiche der Fadenabschnitte wenigstens ein Verbindungsfaden gelegt und mit den Fadenabschnitten verschweißt ist. Grundgedanke der Erfindung ist es also, an den jeweils benachbarten Bähnrändern überlappende Fadenabschnitte vorzusehen und darüber einen Verbindungsfaden zu legen, der dann mit den einzelnen Fadenabschnitten verschweißt wird. Hierdurch entsteht eine gegenseitige Verbindung der beiden Bahnränder. Die Fadenabschnitte und die Verbindungsfäden können dabei in einer solchen Dichte angeordnet werden, daß die Durchlässigkeit der Textilbahn in dem Bereich der Bahnränder sich nicht wesentlich ändert. Die erfindungsgemäße Verbindung der beiden Bahnränder läßt sich auch maschinell durchführen. Die Herstellung der Verbindung ist somit zeitsparend und kostengünstig möglich.

In Ausbildung der Erfindung ist vorgesehen, daß Verbindungsfäden auf beiden Seiten der Textilbahn an Fadenabschnitten angeschweißt sind. Hierdurch läßt sich eine verbesserte Festigkeit der Verbindung erzielen. Außerdem eignet sich diese Ausführungsform insbesondere bei Strukturfäden, die in zwei Lagen übereinander angeordnet sind und bei denen aus beiden Lagen überstehende Fadenabschnitte gebildet werden.

Die überstehenden Fadenabschnitte können verschiedenartig ausgebildet sein. So besteht durchaus die Möglichkeit, die Fadenabschnitte schlaufenförmig auszubilden. In einfacher Ausführungsform sind sie als quer über die Bahnränder vorstehende Fadenenden ausgebildet, die beim Aneinanderlegen der Bahnränder zum ineinandergreifenden Überlappen gebracht werden, so daß sie sich in einer Ebene befinden.

Um den Warencharakter der Textilbahn möglichst wenig zu ändern, ist es zweckmäßig, daß der Verbindungsfaden bzw. die Verbindungsfäden identisch ist bzw. sind mit den parallel dazu verlaufenden Strukturfäden. Außerdem sollte der Abstand des Verbindungsfadens zu den parallel verlaufenden, benachbarten Strukturfäden gleich dem Abstand dieser Strukturfäden untereinander sein, so daß die Längsfadenverteilung auch im Verbindungsbereich konstant ist.

Die Strukturfäden sind vorzugsweise Teil eines Gewebes, Gewirkes, Fadengeleges oder einer Einlage innerhalb einer Folie oder dergleichen. Zusätzlich kann die Textilbahn zumindest an einer Seite mit einer Faserschicht versehen werden, um ihr filzartigen Charakter zu geben.

Grundsätzlich besteht die Möglichkeit, die Textilbahn endlich auszubilden, wobei die Stirnkanten mittels einer Naht verbunden werden können. In diesem Fall wird die Textilbahn zumindest teilweise aus mehreren nebeneinanderliegenden, endlichen Teilbahnstreifen aufgebaut. Alternativ dazu ist vorgesehen, daß die Textilbahn endlos ausgebildet ist, wobei die Herstellung in der Weise geschehen kann, wie dies in der GB-A-975 750, EP-A-0 665 329 und EP-B-0 464 258 beschrieben ist. Hierbei werden die Teilbahnen wenigstens teilweise von einem oder mehreren Teilbahnstreifen gebildet, wobei jeder Teilbahnstreifen in Längsrichtung der Textilbahn sowie wendelförmig quer dazu fortschreitend gewickelt ist. Alternativ dazu können die Teilbahnstreifen auch selbst endlos ausgebildet und dann nebeneinandergesetzt werden.

Das erfindungsgemäße Verfahren ist dadurch gekennzeichnet, daß die Teilbahnen an ihren Bahnrändern mit überstehenden Fadenabschnitten versehen werden, welche beim Aneinanderlegen der Teilbahnen in gegenseitige Überlappung gebracht werden, und daß auf die überlappenden Bereiche der Fadenabschnitte wenigstens ein Verbindungsfaden längs der Bahnränder gelegt und mit den Fadenabschnitten verschweißt wird, und zwar vorzugsweise mittels Ultraschall. Dabei sollte der jeweilige Verbindungsfaden beim oder unmittelbar nach dem Auflegen mit den Fadenabschnitten verschweißt werden, um ein Verrutschen des Verbindungsfadens zu vermeiden.

Eine Vorrichtung zur Durchführung des vorbeschriebenen Verfahrens weist eine Fadenauflegeeinrichtung zum Auflegen wenigstens eines Verbindungsfadens auf sich überlappende Fadenabschnitte an Bahnrändern von Teilbahnen einer Textilbahn sowie eine Schweißeinrichtung zum Verschweißen des Verbindungsfadens mit den Fadenabschnitten auf. Eine solche Vorrichtung ist grundsätzlich auch als Handgerät konzipierbar. Für die Qualität der Verbindung ist es jedoch vorteilhafter, wenn ein besonderer Antrieb zur Erzeugung einer Relativbewegung zwischen Fadenauflegeeinrichtung und Schweißeinrichtung einerseits sowie Textilbahn andererseits vorgesehen ist, so daß das Auflegen und Verschweißen des jeweiligen Verbindungsfadens im wesentlichen maschinell erfolgt.

Die Vorrichtung kann hierfür beispielsweise eine Auflage für die stationären Aufnahmen der Textilbahnen aufweisen, wobei dann die Fadenauflegeeinrichtung und die Schweißeinrichtung parallel dazu beweglich geführt sind. Umgekehrt kann aber auch vorgesehen sein, daß die Fadenauflegeeinrichtung und Schweißeinrichtung gerätefest angeordnet und ein Antrieb zum Bewegen der Textilbahn an beiden Einrichtungen vorbei vorgesehen ist. Eine solche Ausbildung ist insbesondere dann möglich, wenn die Textilbahn endlos ist, so daß sie zwischen zwei Walzen aufgespannt werden kann.

Die Schweißeinrichtung muß in der Lage sein, den Verbindungsfaden und die überstehenden Fadenabschnitte so zu erhitzen, daß sie an den Verbindungspunkten Klebkraft entwikkeln. Hierzu eignet sich beispielsweise eine Ultraschallschweißeinrichtung.

Die Fadenauflegeeinrichtung hat vorzugsweise einen Fadenspeicher, von dem der Verbindungsfaden durch die Fadenauflegeeinrichtung automatisch abgezogen wird.

In der Zeichnung ist die Erfindung anhand eines schematisch dargestellten Ausführungsbeispiels näher veranschaulicht. Es zeigen:
- Figur 1: eine Draufsicht auf eine Vorrichtung zur Herstellung einer Textilbahn;
- Figur 2: eine perspektivische Ansicht der Strukturfäden von zwei Teilbahnen im Bereich ihrer Bahnränder mit einer Ultraschallschweißeinrichtung und

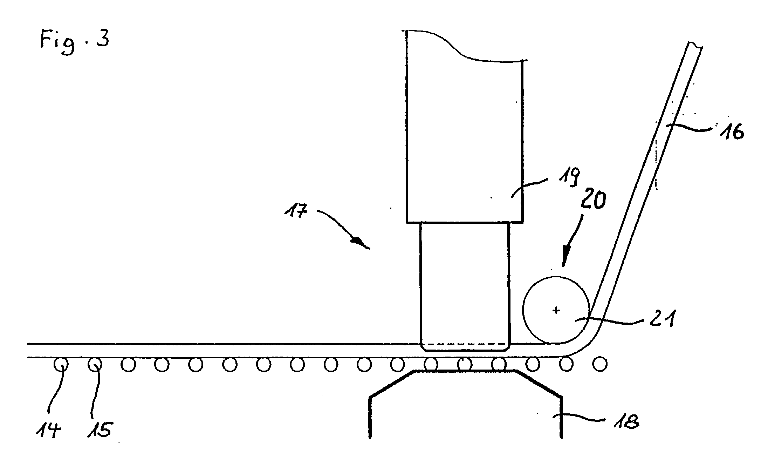

- Figur 3: eine Seitenansicht der Anordnung gemäß Figur 2.

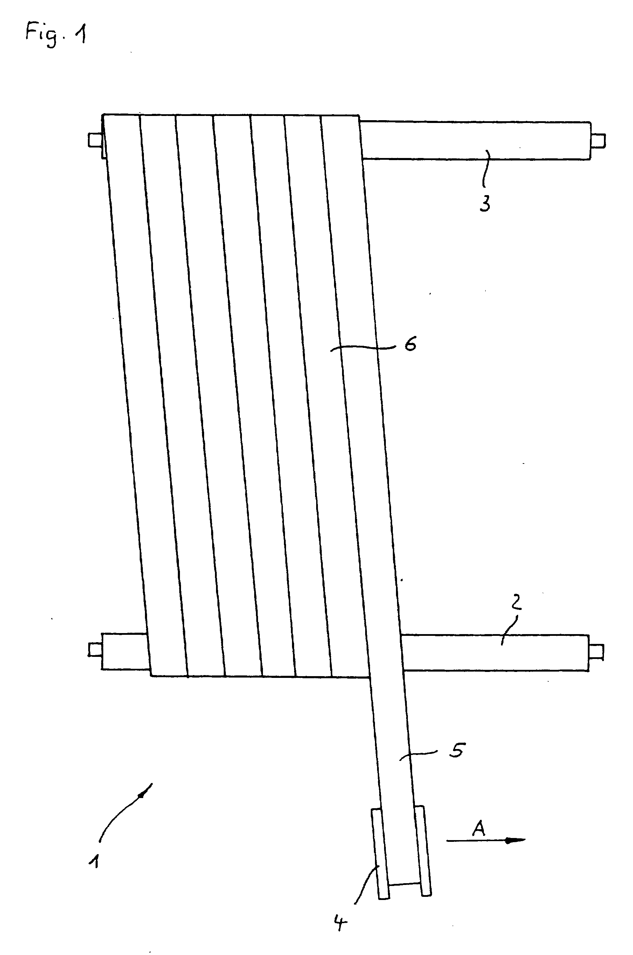

Die in Figur 1 dargestellte Vorrichtung 1 weist zwei beabstandete Walzen 2, 3 auf, die jeweils gleichsinnnig angetrieben sind. Von einer Vorratsrolle 4 wird ein Textilstreifen 5 abgezogen. Die Vorratsrolle 4 ist leicht schräg gestellt und wird beim Abzug in Richtung des Pfeils A bewegt. Hierdurch wickelt sich der Textilstreifen 5 wendelförmig auf die beiden Walzen 2, 3 auf, bis eine gewünschte Breite erreicht ist. Dies kann auch mehrlagig geschehen, indem die Vorratsrolle 4 nach Erreichen der Endbreite wieder zurückbewegt wird, wobei der Ablaufwinkel entsprechend angepaßt wird. Im einzelnen ist dies der EP-A-0 665 329 und der EP-B-0 464 258 zu entnehmen. Je nach dem Verhältnis von Abzugsgeschwindigkeit und Geschwindigkeit der Querbewegung der Vorratsrolle 4 überlappen sich die einzelnen Teilbahnen - beispielhaft mit 6 bezeichnet -, oder ihre Bahnränder kommen nebeneinander zu liegen. Beides kann auch miteinander kombiniert werden, wie die verschiedenen Ausführungsbeispiele zeigen, die in der EP-B-0 464 258 offenbart sind.

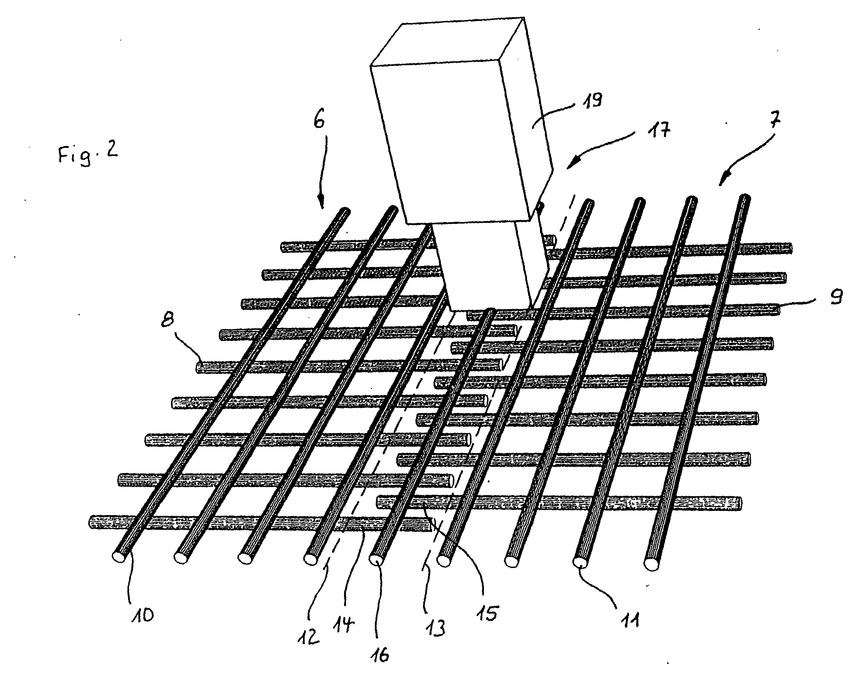

Figur 2 zeigt in vergrößerter Darstellung einen Ausschnitt von zwei benachbarten Teilbahnen 6, 7, die von dem Textilstreifen 5 durch Abziehen von der Vorratsrolle 4 nebeneinandergelegt worden sind. Die Teilbahnen 6, 7 bestehen jeweils aus Querfäden - beispielhaft mit 8 bzw. 9 bezeichnet -, welche zusammengenommen ein Querfadengelege bilden. Darüber sind in gleichmäßigen Abständen Längsfäden - beispielhaft mit 10 bzw. 11 bezeichnet - gelegt, welche jeweils zusammengenommen ein Längsfadengelege bilden. Die Querfäden 8, 9 und die Längsfäden 10, 11 sind an ihrem Kreuzungspunkt miteinander verbunden, beispielsweise durch Verschweißung, Verklebung oder dergleichen. Sie bestehen aus thermoplastischen Kunststoffen, wie sie für Papiermaschinenbänder zur Anwendung kommen, beispielsweise Polyamid, Polyester usw. Sie können als Monofile oder Multifile ausgebildet sein.

Die Teilbahnen 6, 7 haben Bahnränder 12, 13, welche durch die gestrichelten Linien gekennzeichnet sind. Die Querfäden 8, 9 stehen über die Bahnränder 12, 13 vor und bilden dort Fadenabschnitte - beispielhaft mit 14 bzw. 15 bezeichnet -, wobei jeweils ein Fadenabschnitt 14 bzw. 15 der einen Teilbahn 6, 7 in eine Lücke zwischen zwei Fadenabschnitten 14 bzw. 15 der anderen Teilbahn 6 bzw. 7 einfaßt, so daß sich die Fadenabschnitte 14, 15 in Richtung der Längsfäden 10, 11 gesehen überlappen. Die Teilbahnen 6, 7 sind also gegeneinander um jeweils einen halben Mittenabstand zwischen zwei benachbarten Querfäden 8 bzw. 9 versetzt, so daß sie reißverschlußartig ineinandergreifen.

Über die Fadenabschnitte 14, 15 wird parallel zu den Längsfäden 10, 11 ein Verbindungsfaden 16 gelegt und mit den Fadenabschnitten 14, 15 verschweißt. Hierzu weist die Vorrichtung 1 an geeigneter Stelle zwischen den beiden Walzen 2, 3 eine Verbindungseinrichtung 17 auf. Die Verbindungseinrichtung 17 hat einen untenseitigen Stützbalken 18, der sich parallel zu den Walzen 2, 3 erstreckt und der die Teilbahnen 6, 7 unterstützt. Oberhalb des Stützbalkens 18 ist eine übliche Ultraschallschweißeinrichtung 19 angeordnet, durch die der Verbindungsfaden 16 läuft. Durch die Ultraschallschweißeinrichtung 19 wird er so stark erhitzt, daß er teilweise plastifiziert und an den Fadenabschnitten 14, 15 anklebt bzw. anhaftet.

Vor der Ultraschallschweißeinrichtung 19 befindet sich eine Fadenauflegeeinrichtung 20 mit einer Auflegerolle 21 und einem hier nicht näher dargestellten Fadenspeicher für den Verbindungsfaden 16. Von diesem Fadenspeicher wird der Verbindungsfaden 16 über die Auflegerolle 21 auf die Fadenabschnitte 14, 15 gedrückt und anschließend durch Plastifizierung in der Ultraschallschweißeinrichtung 19 mit den Fadenabschnitten 14, 15 verbunden. Auf diese Weise entsteht eine feste Verbindung zwischen den beiden Teilbahnen 6, 7.

Es ist nicht zwingend, daß die Überlappung der Fadenabschnitte 14, 15 in der Weise hergestellt wird, wie aus Figur 2 ersichtlich. Denkbar ist auch, daß nur jeder zweite Querfaden 8, 9 überstehende Fadenabschnitte 14, 15 ausbildet und die Teilbahnen 6, 7 um einen halben Mittenabstand zwischen zwei Fadenabschnitten 14, 15 versetzt werden. Hierdurch wäre die Dichte der Fadenabschnitte 14, 15 reduziert auf die Dichte der Querfäden 8, 9.

Eine weitere Möglichkeit besteht darin, die Teilbahnen 6, 7 nicht gegeneinander zu versetzen und abwechselnd nur jeden zweiten Querfaden 8, 9 mit einem überstehenden Fadenabschnitt zu versehen, so daß sich die Stirnseiten der Querfäden 8, 9 mit geringem Abstand gegenüberstehen. Auch in diesem Fall würde die Dichte der Fadenabschnitte 14, 15 der Dichte der Querfäden 8, 9 entsprechen.

Wie aus Figur 2 ersichtlich ist, ist der Abstand der Bahnränder 12, 13 so gewählt, daß der Verbindungsfaden 16 zu den benachbarten Längsfäden 10, 11 den gleichen Abstand hat wie die Längsfäden 10, 11 untereinander. Die Fadendichte der Längsfäden 10, 11 ist deshalb nach Aufbringen des Verbindungsfadens 16 auch im Bereich der Bahnränder 12, 13 konstant.

Nach Fertigstellung der Verbindung in der oben beschriebenen Weise werden die Teilbahnen 6, 7 mit einem Faservlies belegt und dieses mit dem Fadengelege vernadelt. Dabei kann auch das Faservlies streifenförmig in ähnlicher Weise aufgetragen werden, wie dies in Figur 1 mit dem Textilstreifen 5 gezeigt ist.

## Patentansprüche

1. Textilbahn, insbesondere als Basis für Papiermaschinenbespannungen, wobei die Textilbahn Strukturfäden (8, 9, 10, 11) enthält und in Breitenrichtung gesehen wenigstens teilweise aus mehreren, aneinanderliegenden Teilbahnen (6, 7) zusammengesetzt ist, welche an ihren Bahnrändern (12, 13) miteinander verschweißt sind, **dadurch gekennzeichnet, daß** die. Teilbahnen (6, 7) an ihren Bahnrändern (12, 13) überstehende Fadenabschnitte (14, 15) aufweisen, die überlappend ineinandergreifen, und daß über die Fadenabschnitte (14, 15) wenigstens ein Verbindungsfaden (16) gelegt und mit den Fadenabschnitten (14, 15) verschweißt ist.

2. Textilbahn nach Anspruch 1, **dadurch gekennzeichnet, daß** Verbindungsfäden auf beiden Seiten der Teilbahnen an Fadenabschnitten angeschweißt sind.

3. Textilbahn nach Anspruch 1 oder 2, **dadurch gekennzeichnet, daß** die Fadenabschnitte (14, 15) als quer über die Bahnränder (12, 13) vorstehende Fadenenden ausgebildet sind.

4. Textilbahn nach einem der Ansprüche 1 bis 3, **dadurch gekennzeichnet, daß** Fadenabschnitte (14, 15) und Verbindungsfaden (16) in einer solchen Dichte vorhanden sind, daß die Durchlässigkeit der Textilbahn gleichmäßig ist.

5. Textilbahn nach einem der Ansprüche 1 bis 4, **dadurch gekennzeichnet, daß** der Verbindungsfaden (16) bzw. die Verbindungsfäden identisch ist bzw. sind mit den parallel dazu verlaufenden Strukturfäden (10, 11).

6. Textilbahn nach einem der Ansprüche 1 bis 5, **dadurch gekennzeichnet, daß** der Abstand des Verbindungsfadens (16) zu den parallel verlaufenden, benachbarten Strukturfäden (10, 11) gleich dem Abstand dieser Strukturfäden (10, 11) untereinander ist.

7. Textilbahn nach einem der Ansprüche 1 bis 6, **dadurch gekennzeichnet, daß** die Strukturfäden (8, 9, 10, 11) Teil eines Gewebes, Gewirkes, Fadengeleges oder einer Einlage sind.

8. Textilbahn nach einem der Ansprüche 1 bis 7, **dadurch gekennzeichnet, daß** die Textilbahn zumindest an einer Seite eine Faserschicht aufweist.

9. Textilbahn nach einem der Ansprüche 1 bis 8, **dadurch gekennzeichnet, daß** die Textilbahn endlos ausgebildet ist.

10. Textilbahn nach einem der Ansprüche 1 bis 9, **dadurch gekennzeichnet, daß** die Teilbahnen aus mehreren gleich langen Teilbahnstreifen gebildet sind.

11. Textilbahn nach einem der Ansprüche 1 bis 10, **dadurch gekennzeichnet, daß** die Teilbahnen (6, 7) wenigstens teilweise von einem Teilbahnstreifen (5) gebildet sind, der in Längsrichtung der Textilbahn sowie wendelförmig quer dazu fortschreitend gewickelt ist.

12. Textilbahn nach einem der Ansprüche 1 bis 11, **dadurch gekennzeichnet, daß** die Teilbahnstreifen endlos ausgebildet sind.

13. Verfahren zur Herstellung einer Textilbahn, die textile Strukturfäden (8, 9, 10, 11) enthält, wobei die Teilbahn in wenigstens einer Richtung gesehen aus mehreren, aneinanderliegenden Teilbahnen (6, 7) aufgebaut wird, welche an ihren Bahnrändern (12, 13) miteinander verschweißt werden, **dadurch gekennzeichnet, daß** die Teilbahnen (6, 7) an ihren Bahnrändern (12, 13) mit überstehenden Fadenabschnitten (14, 15) versehen werden, welche beim Aneinanderlegen der Teilbahnen (6, 7) in gegenseitige Überlappung gebracht werden, und daß auf die Fadenabschnitte (14, 15) wenigstens ein Verbindungsfaden (16) längs der Bahnränder (12, 13) gelegt und mit den Fadenabschnitten (14, 15) verschweißt wird.

14. Verfahren nach Anspruch 13, **dadurch gekennzeichnet, daß** Verbindungsfaden (16) und Fadenabschnitte (14, 15) ultraschallverschweißt werden.

15. Verfahren nach Anspruch 13 oder 14, **dadurch gekennzeichnet, daß** der jeweilige Verbindungsfaden (16) beim oder unmittelbar nach dem Auflegen mit den Fadenabschnitten (14, 15) verschweißt wird.

16. Verfahren nach einem der Ansprüche 13 bis 15, **dadurch gekennzeichnet, daß** jeweils ein Verbindungsfaden an der Oberseite und einer an der Unterseite der Textilbahn angeschweißt wird.

17. Verfahren nach einem der Ansprüche 13 bis 16, **dadurch gekennzeichnet, daß** Fadenabschnitte (14, 15) und Verbindungsfaden (16) in einer solchen Dichte miteinander verbunden werden, daß keine wesentliche Änderung der Durchlässigkeit in diesem Bereich eintritt.

18. Verfahren nach einem der Ansprüche 13 bis 17, **dadurch gekennzeichnet, daß** die Fadenabschnitte (14, 15) als quer über die Bahnränder (12, 13) vorstehende Fadenenden ausgebildet werden.

19. Verfahren nach einem der Ansprüche 13 bis 18, **dadurch gekennzeichnet, daß** ein Verbindungsfaden (16) bzw. Verbindungsfäden verwendet wird bzw. werden, der bzw. die identisch ist bzw. sind mit den parallel dazu verlaufenden Strukturfäden (10, 11).

20. Verfahren nach einem der Ansprüche 13 bis 19, **dadurch gekennzeichnet, daß** die Verbindung der Bahnränder (12, 13) in der Weise hergestellt wird, daß der Abstand des Verbindungsfadens (16) zu den parallel verlaufenden, benachbarten Strukturfäden (10, 11) gleich den Abständen dieser Strukturfäden (10, 11) untereinander ist.

21. Verfahren nach einem der Ansprüche 13 bis 20, **dadurch gekennzeichnet, daß** die Strukturfäden (8, 9, 10, 11) als Teil eines Gewebes, Gewirkes, Fadengeleges oder einer Einlage ausgebildet werden.

22. Vorrichtung zur Durchführung des Verfahrens nach einem der Ansprüche 13 bis 21, **gekennzeichnet durch** eine Fadenauflegeeinrichtung (20) zum Auflegen wenigstens eines Verbindungsfadens (16) auf sich überlappende Fadenabschnitte (14, 15) an Bahnrändern (12, 13) von Teilbahnen (6, 7) einer Textilbahn sowie **durch** eine Schweißeinrichtung (19) zum Verschweißen des Verbindungsfadens (16) mit den Fadenabschnitten (14, 15).

23. Vorrichtung nach Anspruch 22, **dadurch gekennzeichnet, daß** ein Antrieb zur Erzeugung einer Relativbewegung zwischen Fadenauflegeeinrichtung (20) und Schweißeinrichtung (19) einerseits sowie Textilbahn andererseits vorgesehen ist.

24. Vorrichtung nach Anspruch 22 oder 23, **dadurch gekennzeichnet, daß** eine Auflage für die stationäre Aufnahme der Textilbahn vorgesehen ist und Fadenauflegeeinrichtung und Schweißeinrichtung parallel dazu beweglich geführt sind.

25. Vorrichtung nach Anspruch 22 oder 23, **dadurch gekennzeichnet, daß** Fadenauflegeeinrichtung (20) und Schweißeinrichtung (19) gerätefest angeordnet und ein Antrieb zum Bewegen der Textilbahn an beiden Einrichtungen vorbei vorgesehen ist.

26. Vorrichtung nach einem der Ansprüche 22 bis 25, **dadurch gekennzeichnet, daß** die Schweißeinrichtung als Ultraschallschweißeinrichtung (19) ausgebildet ist.

27. Vorrichtung nach einem der Ansprüche 22 bis 26, **dadurch gekennzeichnet, daß** die Fadenauflegeeinrichtung (20) einen Fadenspeicher aufweist.

## Claims

1. Length of textile, in particular as the basis for paper-making machine coverings, in which the length of textile contains structural threads (8, 9, 10, 11) and, when seen in direction of width, consists at least in part of a plurality of partial lengths (6, 7), which lie next to one another and are bonded together at their edges (12, 13), **characterized in that** the partial lengths (6, 7) have portions of thread (14, 15) projecting at their edges (12, 13), which mesh together in an overlapping fashion, and **in that** at least one connecting thread (16) is placed over the portions of thread (14, 15) and is bonded to the portions of thread (14, 15).

2. Length of textile according to Claim 1, **characterized in that** connecting threads are bonded to portions of thread on both sides of the partial lengths.

3. Length of textile according to Claim 1 or 2, **characterized in that** the portions of thread (14, 15) take the form of thread ends projecting crosswise beyond the edges (12, 13) of the partial lengths.

4. Length of textile according to one of Claims 1 to 3, **characterized in that** the portions of thread (14, 15) and the connecting thread (16) are present in such a density that the permeability of the length of textile is uniform.

5. Length of textile according to one of Claims 1 to 4, **characterized in that** the connecting thread (16) or connecting threads is or are identical to the structural threads (10, 11) running parallel thereto.

6. Length of textile according to one of Claims 1 to 5, **characterized in that** the distance of the connecting thread (16) from the adjacent structural threads (10, 11) running parallel thereto is equal to the distance of these structural threads (10, 11) from one another.

7. Length of textile according to one of Claims 1 to 6, **characterized in that** the structural threads (8, 9, 10, 11) are part of a woven fabric, knitted fabric, yarn structure or insert.

8. Length of textile according to one of Claims 1 to 7, **characterized in that** at least on one side the length of textile includes a layer of fibre.

9. Length of textile according to one of Claims 1 to 8, **characterized in that** the length of textile is made in endless form.

10. Length of textile according to one of Claims 1 to 9, **characterized in that** the partial lengths consist of a plurality of strips of equal length.

11. Length of textile according to one of Claims 1 to 10, **characterized in that** the partial lengths (6, 7) consist at least in part of a strip (5), which is progressively wound in longitudinal direction of the length of textile as well as in the form of a helix at right angles thereto.

12. Length of textile according to one of Claims 1 to 11, **characterized in that** the strips of the partial length are made in endless form.

13. Method of manufacturing a length of textile, which contains structural textile threads (8, 9, 10, 11), the partial length being constructed, when seen in at least one direction, from a plurality of adjacent partial lengths (6, 7), which are bonded together at their edges (12, 13), **characterized in that** the partial lengths (6, 7) are provided at their edges (12, 13) with projecting portions of thread (14, 15) which, on placing together of the partial lengths (6, 7), are brought into a mutually overlapping position, and **in that** at least one connecting thread (16) is placed on to the portions of thread (14, 15) along the edges (12, 13) and is bonded to the portions of thread (14, 15).

14. Method according to Claim 13, **characterized in that** connecting thread (16) and portions of thread (14, 15) are bonded by ultrasound.

15. Method according to Claim 13 or 14, **characterized in that** the respective connecting thread (16) is bonded to the portions of thread (14, 15) during or immediately following its positioning thereon.

16. Method according to one of Claims 13 to 15, **characterized in that** a connecting thread is respectively bonded to the upper side and to the lower side of the length of textile.

17. Method according to one of Claims 13 to 16, **characterized in that** the portions of thread (14, 15) and the connecting thread (16) are joined together in such a density that there is no significant change in permeability in this area.

18. Method according to one of Claims 13 to 17, **characterized in that** the portions of thread (14, 15) take the form of thread ends projecting crosswise beyond the edges (12, 13) of the partial lengths.

19. Method according to one of Claims 13 to 18, **characterized in that** a connecting thread (16) or connecting threads is or are used, which is or are identical to the structural threads (10, 11) running parallel thereto.

20. Method according to one of Claims 13 to 19, **characterized in that** the connection of the edges (12, 13) of the partial lengths is effected in such a way that the distance of the connecting thread (16) from the adjacent structural threads (10, 11) running parallel thereto is equal to the distances of these structural threads (10, 11) from one another.

21. Method according to one of Claims 13 to 20, **characterized in that** the structural threads (8, 9, 10, 11) are formed as part of a woven fabric, knitted fabric, yarn structure or an insert.

22. Apparatus for implementing the method according to one of Claims 13 to 21, **characterized by** a thread-positioning device (20) for placing at least one connecting thread (16) on to overlapping portions of thread (14, 15) at the edges (12, 13) of partial lengths (6, 7) of a length of textile, as well as by a bonding device (19) for bonding the connecting thread (16) to the portions of thread (14, 15).

23. Apparatus according to Claim 22, **characterized in that** a drive unit is provided for producing a relative movement between a thread-positioning device (20) and a bonding device (19) on the one hand, and the length of textile on the other hand.

24. Apparatus according to Claim 22 or 23, **characterized in that** a support is provided for holding the length of textile stationary, and a thread-positioning device and a bonding device are carried so that they can move parallel thereto.

25. Apparatus according to Claim 22 or 23, **characterized in that** the thread-positioning device (20) and the bonding device (19) are fixed to the apparatus and a drive unit is provided for moving the length of textile past the two devices.

26. Apparatus according to one of Claims 22 to 25, **characterized in that** the bonding device takes the form of ultrasonically bonding means (19).

27. Apparatus according to one of Claims 22 to 26, **characterized in that** the thread-positioning device (20) includes a thread-storage unit.

## Revendications

1. Bande textile, en particulier comme base pour des revêtements de machine de papier dans laquelle la bande textile contient les fils de structure (8, 9, 10, 11) vus dans une direction large et composés tout au moins partiellement de plusieurs parties de bandes contiguës (6, 7) lesquelles sont composées et soudées ensembles à leurs bords de bande (12, 13), **caractérisée en ce que** les parties de bande de (6, 7) à leurs bords (12, 13) montrent des sections de fil (14, 15) qui s'enchaînent en cascade, et que sur les sections de fil (14, 15) est couché au moins un fil de jonction 1 6) soudé avec les sections de fil (14, 15).

2. Bande textile selon la revendication 1, **caractérisé en ce que** les fils de jonction sur les deux côtés des parties de bande sont soudés aux sections de fils .

3. Bande textile selon de l'une des revendications 1 ou 2, **caractérisé en ce que** les sections de fils (14, 15) sont formées comme transversales aux bords de bandes (12, 13) des fins de fil précédents.

4. Bande textile selon l'une des revendications 1 à 3, **caractérisé en ce que** les sections de fil (14, 15) et le fil de jonction (16) sont disponibles dans une densité telle que la perméabilité de la bande textile est régulière.

5. Bande textile selon l'une des revendications 1 à 4, **caractérisé en ce que** le fil de jonction (16) notamment les fils de jonction identiques, passe en plus parallèlement avec les fils de structure (10, 11).

6. Bande textile selon l'une des revendications 1 à 5, **caractérisé en ce que** l'écartement du fil de jonction (16) est proche des fils de structure voisins passant parallèlement (10, 11), semblable à l'écartement mutuel de ces fils de structure (10, 11).

7. Bande textile selon l'une des revendications 1 à 6, **caractérisé en ce que** les fils de structure (8, 9, 10, 11 ) sont partiellement en tissu, tissu à mailles, assemblage de fils ou d'un encart.

8. Bande textile selon l'une des revendications 1 à 7, **caractérisé en ce que** la bande textile monte tout au moins à un côté une couche de fibres.

9. Bande textile selon l'une des revendications 1 à 8, **caractérisé en ce que** la bande textile est formée sans fin.

10. Bande textile selon l'une des revendications 1 à 9, **caractérisé en ce que** les parties de plusieurs bandes sont formées semblable à de longs rubans de parties de bandes.

11. Bande textile selon l'une des revendications 1 à 10, **caractérisé en ce que** les parties de bande (6, 7) sont au moins partiellement formées par un ruban de partie de bande (5) qui est enroulée plus progressivement dans le sens de la longueur de la bande textile, ainsi qu'en forme d'hélice transversale.

12. Bande textile selon l'une des revendications 1 à 11, **caractérisé en ce que** les rubans de partie de bande sont formés sans fin.

13. Procédé pour la fabrication d'une bande textile qui contient les fils de structure textile (8, 9, 10, 11) dans laquelle la partie de bande vue dans au moins une direction de plusieurs parties de bandes contiguës (6, 7) lesquels sont construites et soudées ensembles à leurs bords de bande (12, 13), caractérisé en que les parties de bandes (6, 7) sont munies des sections de fils s'enchaînant (14, 15) à leurs bords de bandes (12, 13), lesquels étant contiguës aux parties de bande (6, 7) sont amenées dans un recouvrement mutuel sur les sections de fil (14, 15) à au moins un fil de jonction (16) le long de bords de bande (12, 13) et est soudé posé avec les sections de fil (14, 15).

14. Procédé selon la revendication 13, **caractérisé en ce que** le fil de jonction (16) et les sections de fil (14, 15) sont soudés par ultra-sons.

15. Procédé selon la revendication 13 ou 14, **caractérisé en ce que** chaque fil de jonction (16) est soudé à, ou directement après la mise en place avec les sections de fil (14, 15).

16. Procédé selon l'une des revendications 13 à 15, **caractérisé en ce que** chaque fois un fil de jonction est soudé à la surface supérieure et un fil à la surface inférieure de bande textile.

17. Procédé selon l'une des revendications 13 à 16, **caractérisé en ce que** les sections de fil (14, 15) et le fil de jonction (16) sont reliés l'un à l'autre avec une densité telle qu'aucune modification essentielle de la perméabilité n'entre dans cette zone.

18. Procédé selon l'une des revendications 13 à 17, **caractérisé en ce que** les sections de fil (14, 15) sont formées comme transversalement aux bords de bande (12, 13) des extrémités de fils précédents.

19. Procédé selon l'une des revendications 13 à 18, **caractérisé en ce qu'**un fil de jonction (16), notamment fil de jonction utilisé ou qui sont identiques à celui-ci sont passant parallèlement avec les fils de structure (10, 11).

20. Procédé selon l'une des revendications 13 à 19, **caractérisé en ce que** la jonction des bords de bande (12, 13) est produite de manière que la distance du fil de jonction (16) est aux fils de structure avoisinant (10,11) passant sensiblement à distance mutuelle entre ces fils de structure (10, 11).

21. Procédé selon l'une des revendications 13 à 20, **caractérisé en ce que** les fils de structure (8, 9, 10, 11) sont formés comme partie d'un tissu, tissu à mailles, assemblage de fils ou encart.

22. Dispositif pour la réalisation du procédé selon l'une des revendications 13 à 21, **caractérisé par** une installation de superposition de fils (20) de mise en place d'au moins un fil de jonction (16) sur des sections de fil (14,15) s'enchaînant en cascade aux bords de bandes (12, 13) des parties de bandes (6, 7) d'une bande textile ainsi que par une installation de soudage (19) de soudage du fil de jonction (16) avec les sections de fil (14, 15).

23. Dispositif selon la revendication 22, **caractérisé en ce que** d'une part une commande est prévue pour la production d'un mouvement relatif entre l'installation de mise en place des fils (20) l'installation de soudage (19) ainsi que d'autre part les bandes textile.

24. Dispositif selon la revendication 22 ou 23, **caractérisé en ce qu'**une installation est prévue pour la prise stationnaire de la bande textile et une installation de mise en place de fils dirigés de façon mobile et parallèle à l'installation de soudage.

25. Dispositif selon la revendication 22 ou 23 , **caractérisé en ce que** une commande est prévue devant l'installation de mise en place de fils (20) et l'appareil de fixation, l'installation de soudage (19) pour déplacer la bande textile des deux installations.

26. Dispositif selon l'une des revendications 22 à 25, **caractérisé en ce que** l'installation de soudage est formée comme une installation de soudage à ultrasons (19).

27. Dispositif selon l'une des revendications 22 à 26, **caractérisé en ce que** l'installation de mise en place du fil (20) montre un fil a enficher.
